# EUROPÄISCHE PATENTSCHRIFT

(11) **EP 2 735 470 B1**
(45) Veröffentlichungstag und Bekanntmachung des Hinweises auf die Patenterteilung: **24.08.2016**
(21) Anmeldenummer: 14156357.7
(22) Anmeldetag: 30.10.2007
(51) Int. Cl.: B60N 2/66, B60N 2/70, B60N 2/64, B60N 2/44

(54) **Fahrzeugsitz**
Vehicle seat
Siège de véhicule

(30) Priorität: 09.11.2006 DE 102006053201; 14.06.2007 DE 102007028052
(43) Veröffentlichungstag der Anmeldung: 28.05.2014
(62) Teilanmeldung aus: 07819485.9
(73) Patentinhaber: Johnson Controls GmbH, 51399 Burscheid (DE)
(72) Erfinder: Cooke, David, Runcorn Cheshire WA7 5NE (GB); Mathews, Ian, 50670 Köln (DE); Van-Soolingen, Marc, 5932 AW Tegelen (NL); Ndagijimana, Robin, 41469 Neuss (DE); Pellenz, Wolfgang, 53340 Meckenheim (DE)
(74) Vertreter: Wolff, Felix

(56) Entgegenhaltungen:
- EP-A1- 1 167 116
- EP-A2- 0 328 137
- WO-A1-2007/112564
- DE-A1- 3 707 926
- DE-A1- 10 144 078

## Beschreibung

Die Erfindung betrifft einen Fahrzeugsitz, insbesondere einen Kraftfahrzeugsitz, mit einem Sitzteil und einer Rückenlehne, wobei die Rückenlehne eine Schalenstruktur aufweist, welche insassenseitig mit einer Polsterung versehen ist.

Derartige Fahrzeugsitze sind aus der internationalen Patentanmeldung PCT/EP06/001191 bekannt. Die dort offenbarten Kraftfahrzeugsitze zeichnen sich durch eine geringe Bautiefe aus. Strukturen für Fahrzeugsitze sind beispielsweise aus der DE 43 03 006 A1 sowie der DE 697 24 103 T2 bekannt. Darüber hinaus ist aus der DE 37 07 926 A1 ein Fahrzeugsitz gemäss dem Oberbegriff des Anspruchs bekannt.

Der Erfindung liegt die Aufgabe zugrunde, einen Fahrzeugsitz mit einer Rückenlehne mit einer besonders geringen Bautiefe bereitzustellen, ohne dass der Komfort gegenüber herkömmlichen Fahrzeugsitzen verschlechtert wird und/oder den Sitzkomfort eines Fahrzeugsitzes mit einer geringen Bautiefe zu erhöhen.

Gelöst wird die Ausgabe durch einen Fahrzeugsitz mit den Merkmalen des Anspruchs, insbesondere einen Kraftfahrzeugsitz, mit einem Sitzteil und einer Rückenlehne, wobei die Rückenlehne eine Schalenstruktur aufweist, welche insassenseitig mit einer Polsterung versehen ist und die Schalenstruktur mindestens eine Vertiefung zur Aufnahme der dort verdickten Polsterung aufweist.

Erfindungsgemäss weist die Schalenstruktur des Kraftfahrzeugsitzes einen Zentralteil und Seitenflügel auf, die elastisch federnd an der Schalenstruktur angeordnet sind.

Die erfindungsgemäßen Kraftfahrzeugsitze zeichnen sich durch einen hohen Komfort bei einer geringen Bautiefe aus. Durch die geringe Bautiefe werden die Kniefreiheit für Insassen in dahinter angeordneten Fahrzeugsitzen und die Ausnutzung des Fahrzeuginnenraums im Allgemeinen verbessert. Darüber hinaus sind die erfindungsgemäßen Kraftfahrzeugsitze vergleichsweise leicht. Die Sitzschalenstruktur kann an die Wünsche des jeweiligen Kraftfahrzeugherstellers vergleichsweise einfach angepasst werden, wodurch eine Individualisierung der jeweiligen Kraftfahrzeugsitze möglich ist.

Der erfindungsgemäße Kraftfahrzeugsitz weist ein Sitzteil und eine Rückenlehne auf. Während das Sitzteil in herkömmlicher Weise gefertigt sein kann, weist die Rückenlehne eine Schalenstruktur auf, die zumindest teilweise aus Kunststoff besteht. Bezüglich des Sitzteils und der Schalenstruktur wird des Weiteren auf die o.g. PCT/EP06/001191 verwiesen, deren Sitzstruktur einen Zentralteil, der im Bereich um die Wirbelsäule der Insassen angeordnet ist und Seitenflügel, die im seitlichen Randbereich des Rückens angeordnet sind, aufweisen kann. Der Kraftfahrzeugsitz kann an einer beliebigen Stelle innerhalb des Kraftfahrzeuginnenraums angeordnet sein.

Erfindungsgemäss weist die Schalenstruktur mindestens eine Vertiefung zur Aufnahme von verdickten Polsterungen auf. Durch diese Polsterungen wird der Sitzkomfort des erfindungsgemäßen Kraftfahrzeugsitzes erhöht. Dadurch, dass die Polsterungen in Vertiefungen angeordnet sind, wird die Bautiefe der Rückenlehne wenn überhaupt dann nur unwesentlich vergrößert. Durch die Vertiefungen wird des Weiteren die Steifigkeit der Schalenstruktur erhöht. Die Vertiefungen und demnach die verdickten Polsterungen sind im oberen Bereich des Zentralteils der Schalenstruktur angeordnet. Weiterhin sind die Vertiefungen und demnach die verdickten Polsterungen im Bereich der Seitenflügel angeordnet, um wiederum den Sitzkomfort und die seitliche Abstützung der Insassen zu verbessern.

Gemäß der vorliegenden Erfindung weist die Schalenstruktur des Kraftfahrzeugsitzes einen Zentralteil und Seitenflügel auf, die elastisch federnd an der Schalenstruktur angeordnet sind. Dadurch wird zusätzlich der Sitzkomfort der Insassen des Sitzes erhöht. Federnd elastisch im Sinne der Erfindung bedeutet, dass sich die Seitenflügel beim Einsitzen in den Kraftfahrzeugsitz der Rückenkontur ausweichen, dabei aber einen fühlbaren Widerstand bieten. Beim Verlassen des Kraftfahrzeugssitzes formen sich die Seitenflügel wieder zurück. Die Seitenflügel federn bei sich ändernden Lastzuständen, beispielsweise während der Fahrt.

Zwischen dem Zentralteil und dem Seitenflügel ist ein Schlitz angeordnet. Der Schlitz weist einen oberen Bereich auf, in dem sich Mittel zur Reduzierung der Kerbwirkung befinden, um zu vermeiden, dass die Schalenstruktur in diesem Bereich unter Belastung einreißt. Derartige Mittel sind bogenförmige Rundungen oder sonstige Formen, die keine Spitzen aufweisen.

Vorzugsweise weist das Zentralteil Versteifungsmittel, beispielsweise Versteifungsrippen auf, die besonders bevorzugt parallel der Längsachse der Schalenstruktur angeordnet sind.

Vorzugsweise weist der erfindungsgemäße Fahrzeugsitz zusätzlich eine Lehnenstruktur, beispielsweise aus Metall auf, um dem Fahrzeugsitz die nötige Steifheit zu verleihen. Besonders bevorzugt ist das Zentralteil der Schalenstruktur in ihrem oberen Bereich mit semiflexiblen Lagern an einer Lehnenstruktur verbunden. Diese Lager verbinden die Schalenstruktur fest mit der Lehnenstruktur, weisen aber, beispielsweise durch die Wahl des Werkstoffs, beispielweise eines halbstarren Kunststoffs, eine gewisse Elastizität auf. Dadurch kann sich die Schalenstruktur relativ zur Lehenstruktur bewegen, so dass sich die Schalenstruktur in gewissen Grenzen an die Form des Rückens des Fahrzeuginsassen anpassen kann, was sich positiv auf den Sitzkomfort auswirkt.

Weiterhin bevorzugt weist das Zentralteil der Schalenstruktur an seinem unteren Bereich eine Lageranordnung auf, die beim Einsitzen eine Relativbewegung zwischen dem Zentralteil und der Lehenstruktur zulässt. Durch diese bevorzugte Ausführungsform kann sich auch der untere Teil des Zentralteils der Schalenstruktur an den Rücken des Sitzinsassen anpassen.

Vorzugsweise umfasst die Lageranordnung eine Drehhebelanordnung, wobei vorzugsweise ein Drehhebel an dem Zentralteil der Schalenstruktur und ein Hebel drehbar mit der Lehnenstruktur des Fahrzeugsitzes verbunden ist. Die beiden Hebel sind über eine Drehachse miteinander verbunden.

Eine weitere bevorzugte Ausführungsform besteht aus einem Drehhebel, der an seinem einen Ende drehbar mit der Lehnenstruktur verbunden ist und an seinem anderen Ende mit einer Linearführung zusammenwirkt, die an dem Zentralteil angeordnet ist.

Besonders bevorzugt ist die Lageranordnung, vorzugsweise mit einem Federmittel, vorgespannt, so dass z.B. die Vorwölbung des Zentralteils im Bereich der Lordose durch Veränderung beispielsweise der Federspannung gezielt eingestellt werden kann. Besonders bevorzugt erfolgt die Verstellung der Vorspannung des Federmittels mit einer Spannvorrichtung.

Im folgenden wird die Erfindung anhand der Figuren 1 - 6 erläutert. Diese Erläuterungen sind lediglich beispielhaft und schränken den allgemeinen Erfindungsgedanken nicht ein.
- Figur 1: zeigt eine Ausführungsform des erfindungsgemäßen Kraftfahrzeugsitzes.
- Figur 2: zeigt die Schalenstruktur in zwei Ansichten.
- Figur 3: zeigt die Schalenstruktur gemäß Figur 2 mit Polstern.
- Figur 4: zeigt die untere Lageranordnung mit Federmittel.
- Figur 5: zeigt eine weitere Ausführungsform der Lageranordnung mit Federmittel.
- Figur 6: zeigt eine Veränderung der Federspannung.

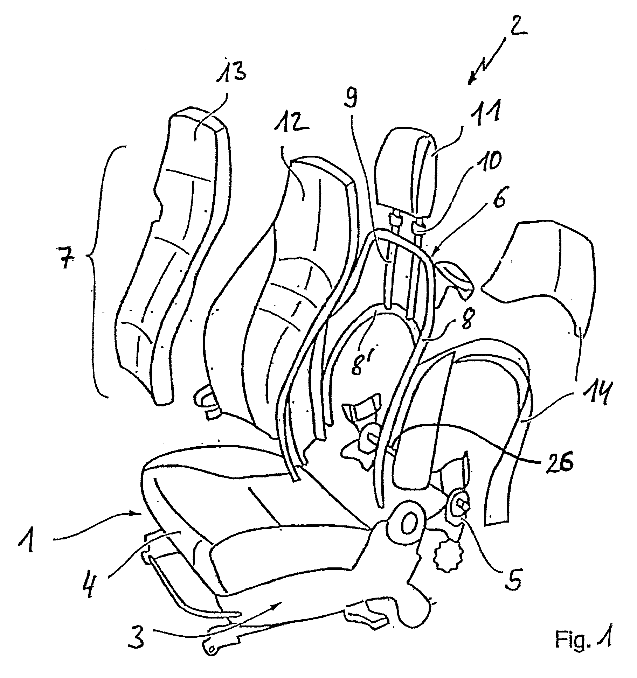

Die Figuren stellen beispielhaft und schematisch verschiedene Ausführungen der Erfindung dar. Die in Figur 1 gezeigte Rückenlehne entspricht in ihrem prinzipiellen Aufbau der in der o.g. PCT/EP 06/001191 offenbarten Ausbildung.

Das Sitzteil 1 des Fahrzeugsitzes 2 besteht in herkömmlicher Weise aus einer aus Stahlblech geschweißten Metallstruktur 3 und einem darauf unmittelbar aufgesetzten, relativ massiven Kissen 4 aus geschäumtem Polyurethan. Die am hinteren Bereich der Metallstruktur 3 angeordneten Lehnenneigungsversteller 5 nehmen die auskragenden Enden eines U-förmigen Rahmenteils 6 der Rückenlehne 7 winkelverstellbar auf. Das Rahmenteil 6 ist aus zwei zueinander beabstandet angeordneten, bogenförmigen Rohrstücken 8, 8' aufgebaut, deren nach unten ragenden Enden mit den Lehnenneigungsverstellern 5 verbunden sind. Im oberen Bereich sind die Rohrstücke 8, 8' durch zwei vertikale, rohrförmige Holme 9 miteinander verbunden, welche die Haltestangen 10 einer herkömmlichen Kopfstütze 11 aufnehmen. Das Rahmenteil 6 ist insassenseitig mit einer aus Kunststoff bestehenden, körperkonturgerecht geformten und elastisch verformbaren Schalenstruktur 12 und einem dünnwandigen Polsterteil 13 versehen. Rückseitig verkleiden Abdeckblenden 14 das Rahmenteil 6. Die Form der Schalenstruktur 12 kann von dem jeweiligen Fahrzeughersteller festgelegt werden, wodurch eine Individualisierungsmöglichkeit gegenüber anderen Fahrzeugherstellern möglich ist.

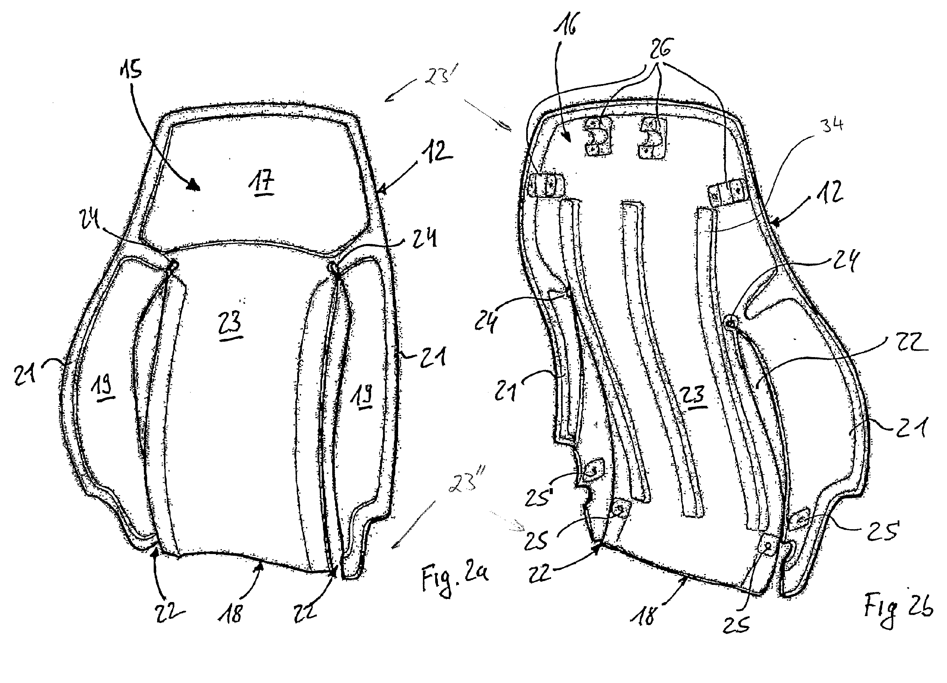

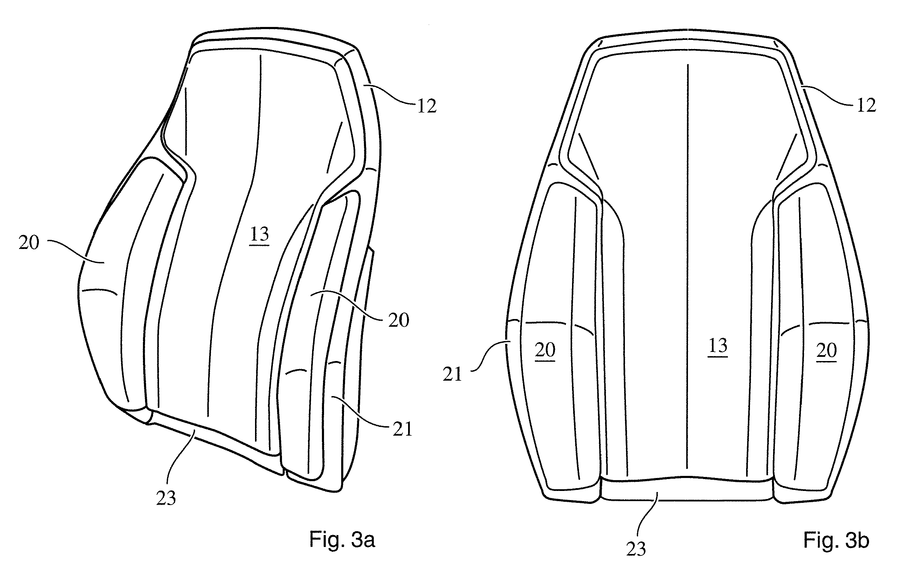

Die Figuren 2a und 2b zeigen die dem Insassen zugewandte Vorderseite 15 bzw. die Rückseite 16 der Schalenstruktur 12. Diese weist vorderseitig eine obere Vertiefung 17 zur Aufnahme des dort verdickten, sich bis zur Unterkante 18 der Schalenstruktur 12 erstreckenden Polsterteils 13 (siehe Fig. 3a, b) sowie laterale Vertiefungen 19 zur Aufnahme gesonderter Seitenpolster 20 auf. Die zugeordneten Seitenflügel 21 der Schalenstruktur 12 sind bereichsweise über etwa vertikal verlaufende, sich von der Unterkante aus bis in das obere Dritte der Schalenstruktur 12 erstreckende Schlitze 22 vom Zentralteil 23 der Schalenstruktur 12 getrennt und gegenüber dem Zentralteil 23 elastisch federnd. Zur Reduzierung der Kerbwirkung sind die Schlitze 22 an ihrem oberen Ende mit einer bogenförmigen Erweiterung 24 versehen. Auf der Rückseite des Zentralteils sind Verstärkungsrippen 34 angeordnet.

Die Seitenflügel 21 und das Zentralteil 23 sind rückseitig im Bereich der Unterkante 18 mit Befestigungspunkten 25, 25' zur Anbringung am Rahmenteil 6 sowie einem zwischen den Lehnensneigungsverstellern 5 verlaufenden Querrohr 26 (siehe Fig. 1) ausgestattet. Am oberen Ende 23' des Zentralteils der Schalenstruktur 12 sind rückseitig ferner halbflexible, schalenartige Lager 26 zum drehbeweglichen Umgreifen des Rohrstücks 8 der Rahmenstruktur 6 vorgesehen.

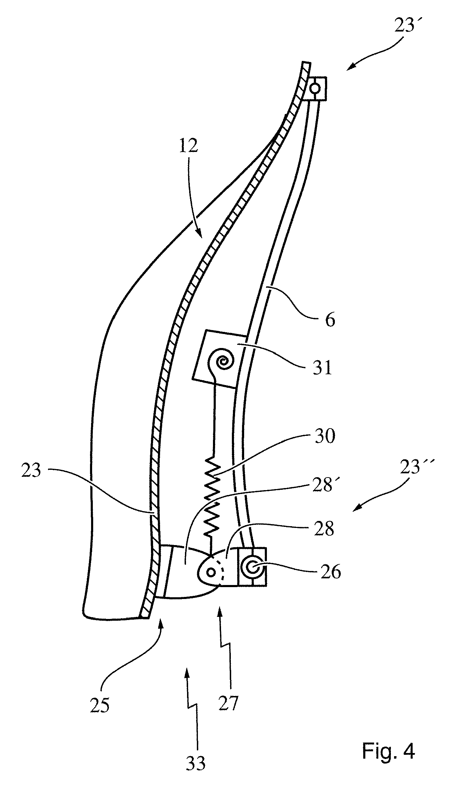

Die Verbindung zwischen den dem Zentralteil 23 zugeordneten Befestigungspunkten 25 und dem Rahmenteil 6 kann mit Vorteil, wie aus Fig. 4 ersichtlich, über eine Drehhebelanordnung 27 erfolgen, welche einen am Querrohr 26 schwenkbar gelagerten ersten Drehhebel 28 und einen zweiten, über den Befestigungspunkt 25 starr an der Schalenstruktur 12 fixierten zweiten Drehhebel 28' umfasst. Die Drehhebel 28, 28' sind miteinander um eine quer zur Sitzrichtung verlaufende Drehachse 29 schwenkbar verbunden und gleichen die vertikale Ausdehnung der Schalenstruktur 12 beim Einfedem des Zentralteils 23 aus. Durch auf die Drehhebelanordnung 27 wirkende, sich beispielsweise von der Drehachse 29 nach oben erstreckende Federmittel 30 lässt sich die Vorwölbung des Zentralteils 23 im Bereich der Lordose beeinflussen und durch eine Vorrichtung 31 zur Veränderung der Federspannung sogar gezielt einstellen. Des weiteren können Eigenschaftsänderungen der Rückenlehne durch Temperaturveränderungen bei Belegung des Sitzes ausgeglichen werden.

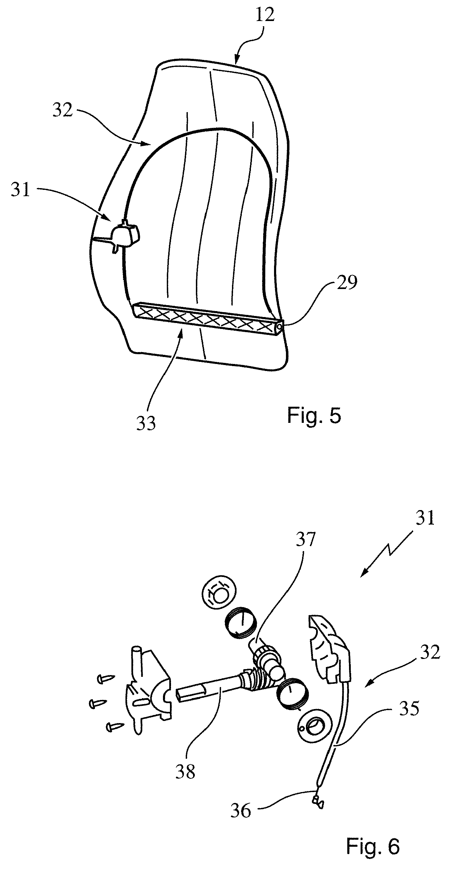

Fig. 5 zeigt eine weitere Ausführungsform der unteren Lageranordnung 33. Während des Einsitzens rotiert die Lagerung 33 um eine Drehachse 29 und erzeugt eine Auslenkung des Bowdenzuges 32, dessen Seele 36 mit der Lagerung 33 beidseitig verbunden ist. Der Grad der Drehung hängt von der Vorspannung des Bowdenzuges sowie von der Höhe der Belastung ab.

Die Vorspannung des Bowdenzuges, der bei dem vorliegenden Beispiel das Federmittel darstellt erfolgt mit dem Mittel 31, das in Figur 6 dargestellt ist. Die Seele 36 des Bowdenzuges wird an zwei Stellen in die Vorrichtung 31 eingeführt und mit der Rolle 37 verbunden. Die Hülle 35 des Bowdenzuges 32 stützt sich an zwei Stellen an dem Mittel 31 ab. Durch Drehung der Rolle wird der Bowdenzug ge- bzw. entspannt. Die Rolle 37 wird durch die Antriebswelle 38 angetrieben, die manuell oder motorisch betrieben werden kann.

### Bezugzeichenliste:

- 1: Sitzteil
- 2: Fahrzeugsitz
- 3: Metallstruktur
- 4: Kissen
- 5: Lehnenneigungsversteller
- 6: Rahmenteil
- 7: Rückenlehne
- 8, 8': Rohrstück
- 9: Holm
- 10: Haltestange
- 11: Kopfstütze
- 12: Schalenstruktur
- 13: Polsterteil
- 14: Abdeckblenden
- 15: Vorderseite
- 16: Rückseite
- 17: Vertiefung
- 18: Unterkante
- 19: Vertiefung
- 20: Seitenpolster
- 21: Seitenflügel
- 22: Schlitz
- 23: Zentralteil
- 23': oberer Teil der Zentraleinheit
- 23'': unterer Teil der Zentraleinheit
- 24: bogenförmige Erweiterung, Spannungsspitzenabbau
- 25, 25': Befestigungspunkt
- 26: Querrohr
- 27: Drehhebelanordnung
- 28, 28': Drehhebel
- 29: Drehachse
- 30: Federmittel
- 31: Vorrichtung zur Veränderung der Federspannung
- 32: Bowdenkabel
- 33: Untere Lageranordnung
- 34: Versteifungsmittel, Versteifungsrippen
- 35: Hülle des Bowdenzugs
- 36: Seele des Bowdenzugs
- 37: Rolle für die Seele des Bowdenzugs
- 38: Antriebswelle

## Patentansprüche

1. Fahrzeugsitz (2) mit einem Sitzteil (1) und einer Rückenlehne (7) mit einer Rückenlehnenstruktur, wobei die Rückenlehne (7) eine Schalenstruktur (12) aufweist, wobei die Schalenstruktur (12) elastisch verformbar ist, zumindest teilweise aus Kunststoff besteht und körperkonturgerecht geformt ist, wobei die Schalenstruktur (12) insassenseitig mit einer Polsterung (13) versehen ist und mindestens eine Vertiefung (17, 19) zur Aufnahme einer Verdickung der Polsterung (13) aufweist, wobei die Schalenstruktur (12) einen Zentralteil (23) und Seitenflügel (21) aufweist, wobei die Seitenflügel (21) elastisch federnd an der Schalenstruktur (12) angeordnet sind, wobei die Seitenflügel (21) dazu ausgebildet sind, bei einem Einsitzen in den Fahrzeugsitz (2) einer Rückenkontur auszuweichen und einen fühlbaren Widerstand zu bieten, wobei die Seitenflügel (21) dazu ausgebildet sind, sich beim Verlassen des Fahrzeugssitzes (2) wieder zurück zu formen, wobei die Seitenflügel (21) dazu ausgebildet sind, bei sich ändernden Lastzuständen zu federn, **dadurch gekennzeichnet, dass** die Seitenflügel (21) der Schalenstruktur (12) bereichsweise über etwa vertikal verlaufende, sich von der Unterkante aus bis in das obere Drittel der Schalenstruktur (12) erstreckende Schlitze (22) vom Zentralteil (23) der Schalenstruktur (12) getrennt sind, wobei die Schlitze (22) an ihrem oberen Ende mit einer bogenförmigen Erweiterung (24) versehen sind, in der sich Mittel zur Reduzierung der Kerbwirkung befinden, wobei die Mittel bogenförmige Rundungen oder sonstige Formen, die keine Spitzen aufweisen, sind, wobei die Seitenflügel (21) und das Zentralieil (23) rückseitig im Bereich der Unterkante (18) mit Befestigungspunkten (25, 25') zur Anbringung am Rahmenteil (6) sowie einem zwischen den Lehnensneigungsverstellern (5) verlaufenden Querrohr (26) ausgestattet sind.

## Claims

1. Vehicle seat (2) with a seat component (1) and a backrest (7) having a backrest structure, wherein the backrest (7) has a shell structure (12), wherein the shell structure (12) is elastically deformable, is at least partially composed of plastic and is shaped to match the contour of a body, wherein the shell structure (12) is provided on the occupant side with an upholstered element (13) and has at least one depression (17, 19) for accommodating a thickening of the upholstered element (13), wherein the shell structure (12) comprises a central part (23) and side wings (21), wherein the side wings (21) are arranged in an elastically resilient manner on the shell structure (12), wherein the side wings (21) are designed to yield to the contour of a back when an individual sits in the vehicle seat (2) and to provide a perceptible resistance, wherein the side wings (21) are designed to be reshaped again when the individual leaves the vehicle seat (2), wherein the side wings (21) are designed to be resilient under changing states of load, **characterized in that** the side wings (21) of the shell structure (12) are separated in regions from the central part (23) of the shell structure (12) via slots (22) which run approximately vertically and extend from the lower edge into the upper third of the shell structure (12), wherein the slots (22) are provided at their upper end with an arcuate extension (24), in which means are located for reducing the stress concentration, wherein the means are arcuate rounded portions or other shapes which do not have any points, wherein the side wings (21) and the central part (23) are equipped on the rear side in the region of the lower edge (18) with fastening points (25, 25') for attaching to the frame part (6) and with a transverse tube (26) running between the backrest inclination adjusters (5).

## Revendications

1. Siège de véhicule (2) comprenant une partie de siège (1) et un dossier (7) avec une structure de dossier, le dossier (7) présentant une structure de coque (12), la structure de coque (12) pouvant être déformée élastiquement, étant constituée au moins en partie de plastique et étant formée de manière correspondant au contour du corps, la structure de coque (12) étant pourvue, du côté de l'occupant, d'un rembourrage (13) et présentant au moins un renfoncement (17, 19) pour recevoir un épaississement du rembourrage (13), la structure de coque (12) présentant une partie centrale (23) et des ailes latérales (21), les ailes latérales (21) étant disposées de manière élastique à ressort contre la structure de coque (12), les ailes latérales (21) étant réalisées de manière à s'écarter d'un contour du dossier lorsqu'une personne s'assoit dans le siège de véhicule (2) et à offrir une résistance palpable, les ailes latérales (21) étant réalisées de manière à se reformer lorsqu'une personne quitte le siège du véhicule (2), les ailes latérales (21) étant réalisées de manière à assurer une suspension dans le cas d'états de charge variables,
**caractérisé en ce que** les ailes latérales (21) de la structure de coque (12) sont séparées en partie de la partie centrale (23) de la structure de coque (12) par le biais de fentes (22) s'étendant approximativement verticalement, s'étendant depuis l'arête inférieure jusque dans le tiers supérieur de la structure de coque (12), les fentes (22) étant pourvues au niveau de leur extrémité supérieure d'un élargissement (24) de forme arquée dans lequel se trouvent des moyens pour réduire l'effet d'entaille, les moyens présentant des arrondis en forme d'arc ou d'autres formes qui ne présentent pas de pointes,
les ailes latérales (21) et la partie centrale (23) étant munies du côté arrière dans la région de l'arête inférieure (18) de points de fixation (25, 25') pour le montage sur la partie de cadre (6) ainsi que d'un tube transversal (26) s'étendant entre des dispositifs de réglage d'inclinaison du dossier (5).
